# EUROPEAN PATENT SPECIFICATION

(11) **EP 2 459 434 B1**
(45) Date of publication and mention of the grant of the patent: **02.09.2015**
(21) Application number: 10750074.6
(22) Date of filing: 28.07.2010
(51) Int. Cl.: B62D 33/06

(54) **CABIN FOR TRUCK AND METHOD FOR REALIZING SAID CABIN**
FÜHRERHAUS FÜR LASTKRAFTWAGEN UND VERFAHREN ZUR HERSTELLUNG DES FÜHRERHAUSES
CABINE POUR CAMION ET SON PROCÉDÉ DE RÉALISATION

(30) Priority: 28.07.2009 EP 09425301
(43) Date of publication of application: 06.06.2012
(73) Proprietor: Iveco S.p.A., 10156 Torino (IT)
(72) Inventor: ZOGNO, Stefano, I-10015 Ivrea (IT)
(74) Representative: Franzolin, Luigi
(86) International application number: PCT/EP2010/060953
(87) International publication number: WO 2011/012643

(56) References cited:
- EP-A1- 0 254 689
- WO-A1-97/10138
- DE-A1-102007 028 536
- DE-T5-112006 001 957
- US-A- 5 769 486
- US-A1- 2007 163 121

## Description

### FIELD OF THE INVENTION

The present invention belongs to the field of the truck production. More in particular, the invention relates to a cabin for a truck and a method for realizing said cabin.

### DESCRIPTION OF THE PRIOR ART

As it is known, most of the trucks (having medium or high carrying capacity) comprise a cabin which consists of a main body to which a roof is connected. The body is traditionally made of metallic material, while the roof, according to a first production process known in the art, is made of thermosetting plastic material and after that it is stuck to the body made of the previously painted metallic material. As an alternative, by means of a second production process known in the art, the roof is made of metallic material and then it is connected, by means of mechanical means to the main body. Once assembled, the main body and the roof (both made of metallic material) are simultaneously painted. An example of a cabin showing the preamble of claim 1 is disclosed in document DE 10 2007 028 536 A1.

The new regulations, which define the structural resistance requirements of the cabins, also known as OICA regulations, have forced the cabin manufacturers to completely redesign the structure of the cabins. According to these regulations, the cabins have to pass a first series of crash tests aiming to check the resistance of the body of the cabin and a second series of crash tests aiming to check the resistance of the roof.

In order to pass these tests, the cabins need to be able to absorb an overall front impact energy of about 20% higher than the one required before the new regulations came into force. It is clear that this necessity has forced the cabin manufacturers to prefer the use of metallic material instead of thermosetting plastic material for the production of the cabin roof.

This industrial choice points out two big problems that have to be solved, the first of which relates to the present connection between the parts (roof and body) of the cabin. At present, this connection is made by means of mechanical connections which are substantially external to the structure of the cabin. These connections are quite critical from the point of view of the mechanical seal, and in many cases they require sealing elements, for example gaskets, to be interposed between the roof and the main body. In addition, the external position of the connection means needs coating means in order to cover the region connecting the roof and the main body.

A second problem is connected to the economic need to continue exploiting the plants used at present for assembling the cabins having the roof made of plastic material. The dimensions of these plants, in fact, do not allow to perform the second production process mentioned above, and in particular these do not include painting means having appropriate dimensions in order to allow the simultaneous painting of the body and of the roof, once they are connected.

According to these considerations, the need emerges for new solutions which allow to overcome the drawbacks mentioned above and which allow a rapid and efficient assembling of a cabin made of metallic material also in plants previously used for assembling the cabins having a plastic roof.

Therefore, the main task of the present invention is to provide a cabin for a truck and a realization method of said cabin. In the scope of this task, an aim of the present invention is to provide a cabin comprising a main body and a roof made of metallic material which may be connected to each other before or after their painting. Another aim of the present invention is to provide a cabin having a main body and a roof which can be easily assembled to each other in a reliable way and with competitive costs.

### SUMMARY OF THE INVENTION

Therefore the present invention relates to a cabin for a truck according to claim 1.

The use of the connecting surfaces mentioned above allows a easy and fast connection of the roof to the main body. This connection may be performed before painting the two parts (roof and body) in order to allow a complete painting of the cabin. As an alternative, the connection may be performed after the independent painting of the two parts. This possibility advantageously allows to continue exploiting the industrial plants previously used for the painting of only the main body of the cabin. Practically, the connecting surfaces make the cabin production process particularly flexible, according to the industrial possibilities.

Moreover according to the invention, the roof comprises a perimetral recess adjacent to the perimetral edge of the roof itself and the connecting surface of the roof comprises a side connectable to a perimetral ring made of metallic material. The recess defines an housing for weld material when the connecting surface are connecting by laser braze welding. This solution allows to obtain a seam welding which is completely contained in the recess. When the connecting surface are connected by gluing, then the connection of the perimetral ring increases the surface useful for the gluing.

According to a first aspect of the invention, the connecting surface of the main body and the connecting surface of the roof preferably have a flat configuration. This solution advantageously facilitates the coupling of the parts (roof and body), thus simplifying the assembling process of the cabin.

The present invention is also relative to a method for realizing a cabin of a truck which comprises a main body made of metallic material and comprising a perimetral support structure which develops between a lower base and an upper frame. Said main body further comprising a connecting surface of the body which develops within the perimetral support structure. The cabin also comprises a roof made of metallic material and comprising a covering structure and a perimetral edge. The roof comprising a connecting surface of the roof which develops within the perimetral support structure.
The method according to the invention comprises the steps of claim 5.

### LIST OF THE FIGURES

Further characteristics and advantages will become more evident from the following detailed description of embodiments of a cabin for trucks according to the prevent invention, that is shown in a merely illustrative and not limitative form in the attached drawings wherein:
- figure 1 shows a prospective view of a cabin for truck according to the present invention;
- figure 2 shows a prospective view relating to the main body of a cabin according to the present invention;
- figure 3 shows a prospective view relating to the roof of a cabin according to the present invention;
- figure 4 shows a section view according to the A-A plane of figure 1;
- figure .5 shows a detailed view of the detail A shown in figure 4;
- figure 6 shows a further prospective view of a roof for the realization of a cabin according to the invention;
- figure 7 shows a view of the perimetral ring of -a roof according to the invention;
- figure 8 shows a prospective view of the roof of figure 6 comprising the perimetral ring of figure 7;
- figure 9 shows a cross section view according to the B₋B plane of figure 8;
- figure 10 shows a detailed view of the detail B shown in figure 9;
- figure 11 shows a section view of a cabin according to the invention comprising the roof of figure 8;
- figure 12 shows a first detailed view of the detail C. shown in figure 11; ,
- figure 12B shows a second detailed view of the detail C shown in figure 11.

### DETAILED DESCRIPTION OF THE INVENTION

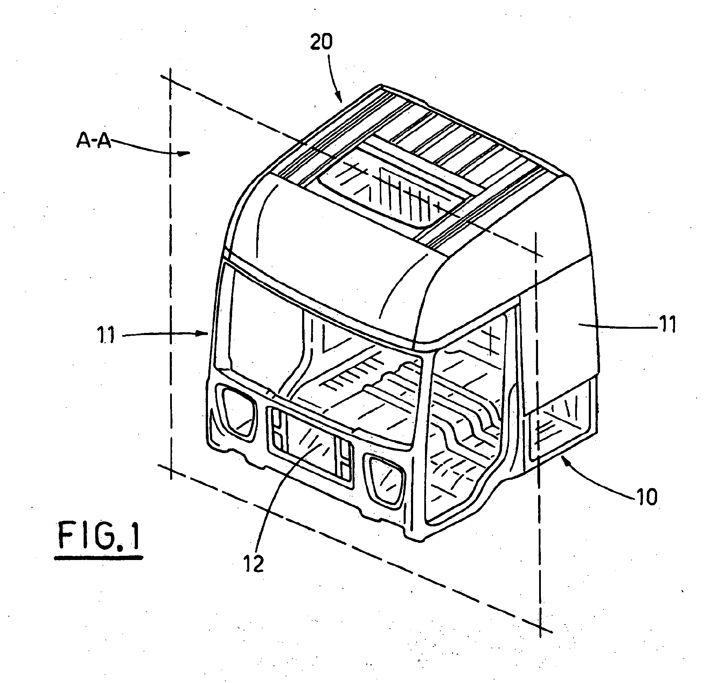

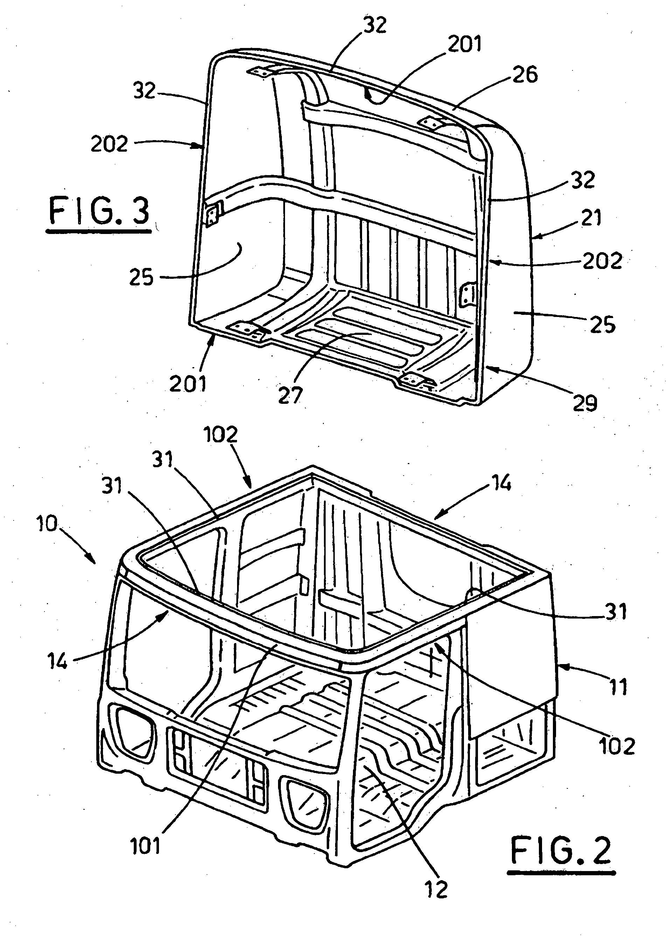

Figure 1 shows a cabin 1 for a truck according to the invention. The cabin 1 comprises a main body 10 and a roof 20 intended to be connected to the upper part of the main body 10. More precisely (see fig. 2) the main body 10, made of metallic material, has a perimetral support structure 11 which develops between a lower base 12 and an upper frame 14. With reference to figure 2, the main body 10 comprises a connecting surface 31 of the main body 10 which develops within the perimetral support structure 11. The connecting surface 31 of the main body 10 is preferably defined by a perimetral portion of the frame 14. In the solution shown in figure 2, for example, the connecting surface 31 extends along a front side 101 of the frame, partially along two opposite sides 102 which develop from the front side 101 and preferably also on the rear side opposite to the front side 101. As better specified later, the connecting surface 31 of the main body 10 is intended to be connected to a connecting surface 32 of the roof 20 in order to perform the assembling of the cabin 20.
With reference to figure 3, the roof 20 according to the invention is made of metallic material and comprises a covering structure 21 delimited by a perimetral edge 29. In the case of the roof shown in figure 3, the covering structure 21 has a substantially convex shape defined by a pair of lateral opposite surfaces 25, by a rear surface 27 and by an upper surface 26 which develops between the other surfaces mentioned above. The perimetral edge 29 of the roof 20 has four sides 201, 202 opposite in pairs.

The roof 20 comprises a connecting surface 32 of the roof 20 which is intended to be connected to the connecting surface 31 of the main body 10. According to a preferred embodiment of the invention, the connecting surface 32 of the roof 20 is defined by a portion of the perimetral edge 29 of the roof 20. In the roof shown in figure 3, such portion extends along a front side 201 and partially along two opposite sides 202 which develop from the front side 201.

According to the invention, the roof comprises a recess R which develops adjacent to the perimetral edge 29. In particular the recess R is defined adjacent to the perimetral edge 20 so as to provide an housing for the weld material when the roof 20 is connected to the main body 10 by laser braze welding.

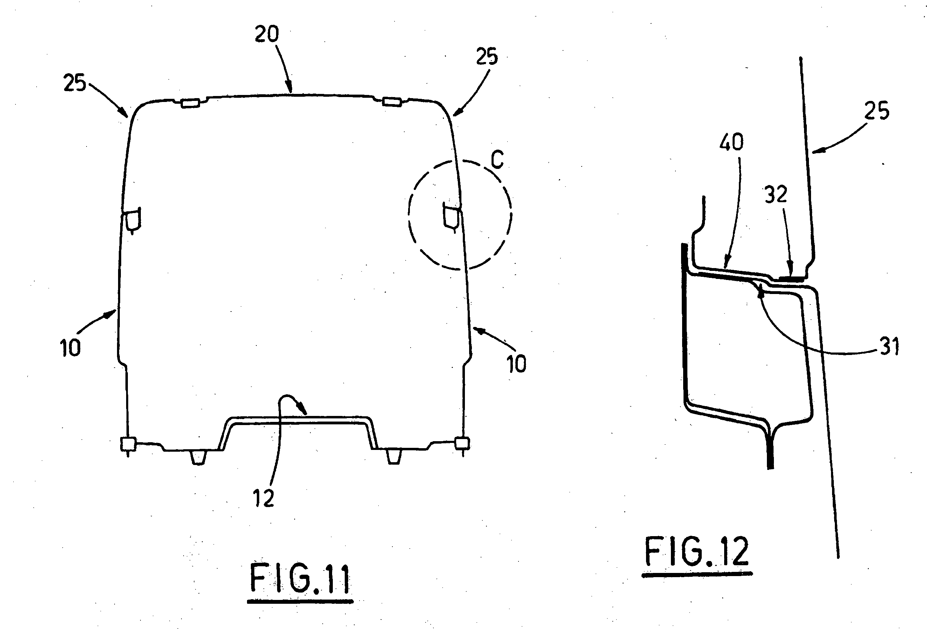

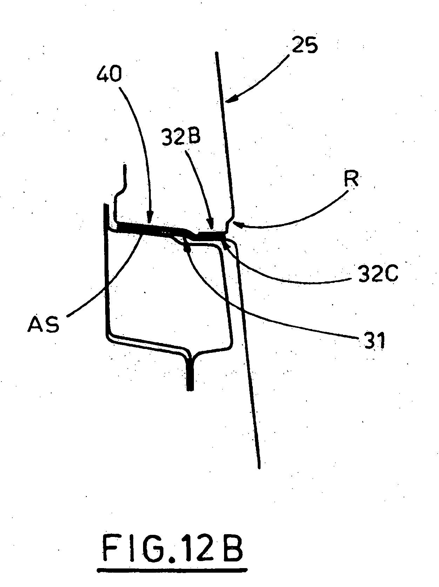

Moreover according to the invention the connection surface 32 of the roof 20 comprises a side 32B, 32C which is connectable to a perimetral ring 40 when the roof 20 is intended to be connected to the main body 10 by means of gluing. In particular said side is preferably the side 32C of the connecting surface 32 which faces the main body 10 (see figure 12B), but in alternative it could be also the side 32B which faces the covering structure 21 of the roof 20.

Therefore, according to the invention, the roof 20 can be connected to the main body 10 both by means of different connecting process, i.e. laser brazing welding or gluing, in function of the kind of plant available. That is allowed by means of the structure of the roof 20, i.e. the recess R and the side 32B,32C of the connecting surface 32, which makes the roof itself particularly flexibile from a manufacturing point of view.

The embodiments described so far are preferred, but non exclusive embodiments of the main body 10 and of the roof 20 of the cabin according to the present invention. Therefore alternative embodiments, but functionally equivalent to the ones described so far, have to be considered as not departing from the scope of the invention.

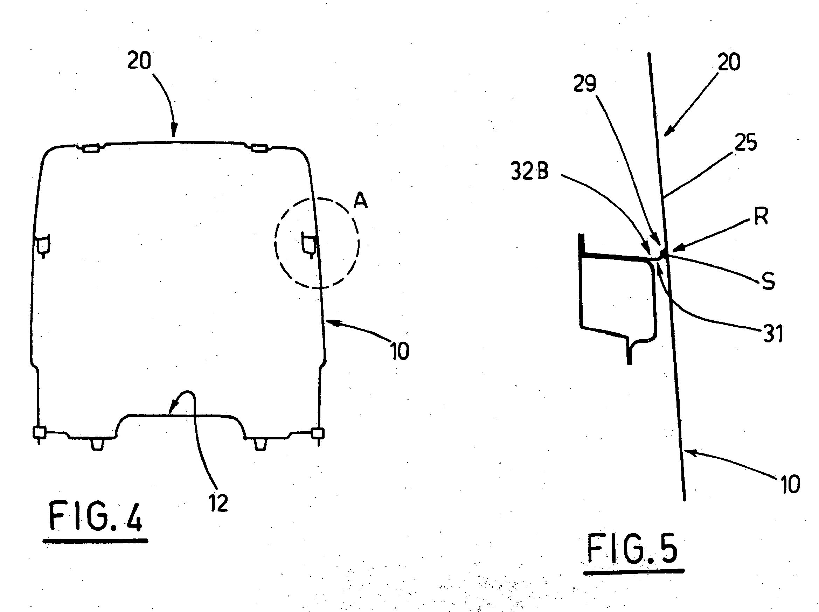

Figure 4 shows a cross section of the cabin 1 according to the invention shown in figure 1. Figure 5, instead, shows a first possible connection between the two connecting surfaces 31, 32. With reference to figure 5, it is possible to observe that the two connecting surfaces 31, 32 are preferably flat, in order to advantageously facilitate the positioning of the roof 20 with respect to the main body 10.

The solution shown in figure 5 is also relative to a first possible assembling of a cabin 1 comprising a main body 10 and a roof 20 according to the present invention. In particular, according to this assembling, the two surfaces 31, 32 are connected by a laser braze welding. This method is particularly suitable for connecting the roof 20 to the main body 10 before painting both elements. In other words, after the laser braze welding, the cabin 1 may advantageously be painted in a integral way in a plant having appropriate dimensions.

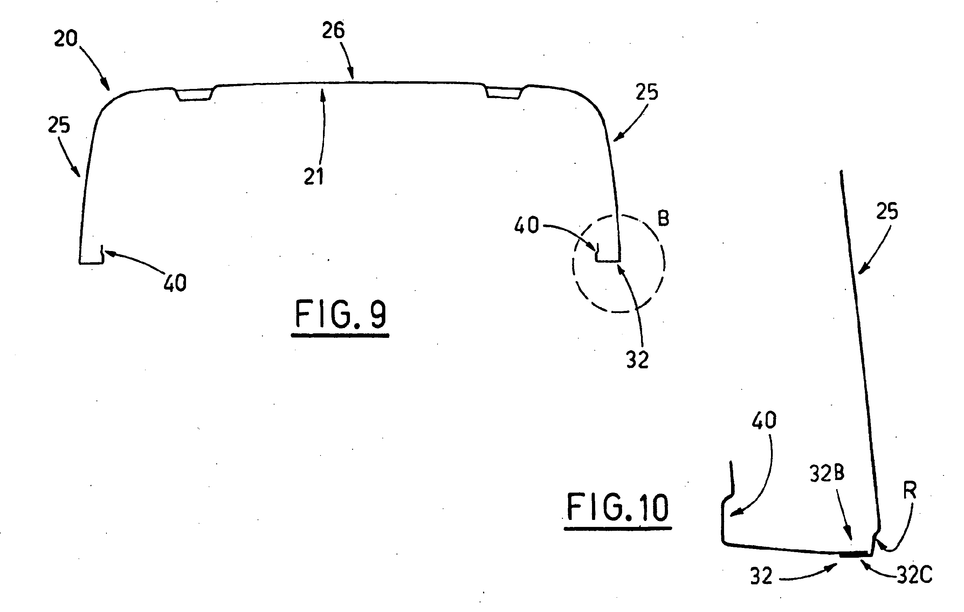

As it is possible to see in figure 5, the laser braze welding needs that the two connecting surfaces 31, 32 are in contact between each other. On this point, it is possible to observe the recess R of the roof develops adjacent to the perimetral edge 29 so that the latter results defined in a sunken position with respect to the lateral surfaces 25 of the covering structure 21 (see also figure 10). As above, indicated the recess R provides a housing for the weld material used in the braze welding.

The use of the laser allows to locally melt the weld material which firmly welds between the two surfaces 31, 32, connecting them to each other. This condition is particularly advantageous in terms of mechanical seal. Moreover the use of the laser, allows to obtain a seam welding S, completely contained within the recess R of roof 20. Thus no additional covering elements or seal elements are necessary.

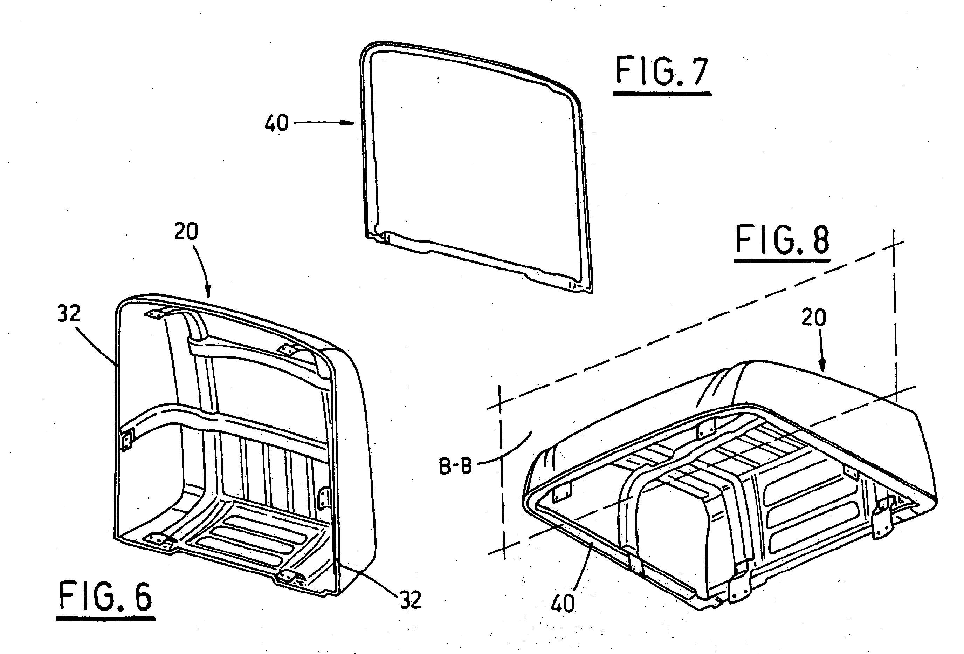

Figures 6 to 12B are relative to a second possible connection of the two surfaces 31 and 32 which advantageously allows to assemble the cabin 1 after the independent painting of the roof 20 and of the main body 10. In particular this assembling mode may advantageously be performed in the plants traditionally used for realizing the cabins with plastic roofs. The roof 20 and the body 10 may, for example, advantageously be painted by means of the same painting means with obvious economic advantages.

According to this second connection mode, the two surfaces 31,32 are connected by gluing. In this case a perimetral ring 40 is connected, preferably by spot welding, to a side 32B,32C of the connecting surface 32 of the roof 20. By this way, the surface used for the connection between the roof 20 and the main body 10 is advantageously increased. On this point, the figure 6 shows the roof 20 before the welding of the perimetral ring 40 shown in figure 7. The figure 8 shows the same roof 20 after the connection of the perimetral ring 40 to the connection surface 32.

Figures 9 and 10 are section views of the roof 20 and allow to observe in detail the welding between the perimetral ring 40 and the connecting surface 32 of the roof 20. In the solution shown in figure 10 the perimetral ring 40 is connected to one side 32B of the connecting surface 32 which faces the covering structure 21 of the roof 20.

Figures 12 and 12B are enlargements of the detail C in figure 11 and shown the roof 10 and the main body 10 respectively before and after the operation of gluing. As it can be seen in these figures, when the welding between the ring 40 and the connecting surface 32 is completed, the perimetral ring 40 constitutes a structural extension of the connecting surface 32 of the roof 20. In this regard, according to a preferred solution, the perimetral ring 40 is welded to the side 32B, 32C by means of a spot welding. This solution allows to improve the process speed and consequently to reduce times and costs of manufacturing.

With reference in particular to figure 12B, the connection by gluing is performed by means of adhesive substance AS provided between the ring 40 and the connecting surface 31 of the main body 10 if the perimetral ring 40 is connected to the side 32C which faces the main body 10. When the perimetral ring 40 is connected to the side 32B which faces the covering structure 21, then the adhesive substance AS is provided whether between the perimetral ring 40 and the connection surface 31 and also provided between the side 32C and the connection surface 31 of the main body 10.

According to another possible embodiment, further mechanical connection elements (not shown) are placed operatively inside the cabin. Said connection element exert a closing action which firmly connects the ring 40 to the first connecting surface 31. These mechanical connection elements may be, for example, nuts or other functionally equivalent means.

The use of mechanical connection elements allows to improve the connection between the ring 40 and the first connecting surface 31. Practically, the combined use of mechanical connection elements and of adhesive substance ensures a reliable and not expensive connection.

The present invention relates also to a realization method of a cabin for a truck comprising a main body and a roof according to what mentioned above. In the method according to the invention, on said main body 10, it is provided a first connecting surface 31 which develops within the perimetral structure of the body itself, and on the roof 20 it is provided a second connecting surface 32 which develops within the covering structure 21 of the roof itself.

The method according to the present invention comprises the step of providing a side 32B,32C of the connecting surface 32 connectable to a perimetral ring 40 and providing a perimetral recess R adjacent to the perimetral edge 29 of the roof 20. Further the method according to the invention comprises the step of connecting the connecting surface 32 of the roof 20 to the connecting surface 31 of the main body by a laser braze welding or by gluing.

When the connection is performed by laser braze welding, then the weld material is advantageously housed in the recess R so as to define, in the recess itself, a seam welding S. Instead when the connection is performed by gluing then the recess R remains substantially empty. In this case a sealing element (non shown) could be inserted in the recess R in order to improve the sealing capability. A simply ornamental element, without particular sealing properties, could be inserted in the recess as well.

The connection by means of laser braze welding is performed preferably before painting the roof 20 and the main body 10. The connection between the two surfaces 31,32 by gluing is performed preferably after painting the two parts (roof and body) of the cabin 1. In this second case, the two surfaces 31,32 are connected to each other by means of an adhesive substance AS provided between the perimetral ring 40 and the first surface 31 of the main body 10.

According to a possible embodiment, the method also comprises the step of providing mechanical connecting elements inside the cabin so as to improve the connection between the perimetral ring 40 and the first surface 31 of the main body exerciting a closing action between the two elements (ring 40 and connection surface 31).

The technical solutions adopted for the cabin allow to completely fulfil the task and the purposes set in advance. In particular the roof and the main body of the cabin may advantageously be assembled according to different assembling modes. This possibility is particularly advantageous from an industrial point of view, since it allows to continue exploiting the existing plants. At the same time, the presence of the connecting surfaces makes the connection between the roof and the main body particularly fast and precise, reducing production time and costs.

The cabin and the method according to the invention, can be subjected to numerous variations or modification, without departing from the scope of the invention as described in the appended claims.

## Claims

1. Cabin (1) for a truck, comprising:
- a main body (10) made of metallic material comprising a perimetral support structure (11) which develops between a lower base (12) and an upper frame (14);
- a roof (20) made of metallic material comprising a covering structure (21) and a perimetral edge (29),
said main body (10) comprising a connecting surface (31) of said main body (10) which develops within said perimetral support structure (11), said roof (20) comprising a connecting surface (32) of said roof (10) which develops inward of said covering structure (21), said connecting surface (31) of said main body (10) being connected to said connecting surface (32) of said roof (20), wherein said perimetral edge (29) of said roof (20) comprises a perimetral recess (R) adjacent to said perimetral edge (29) and wherein one side (32B,32C) of said connecting surface (32) of said roof (20) is connectable to a perimetral ring (40) made of metallic material, **characterized in that** said connecting surfaces (31,32) are connected by means of a laser braze welding, said recess (R) providing an housing for weld material.

2. Cabin (1) according to claim 1, wherein said connecting surfaces (31,32) are substantially flat.

3. Cabin (1) according to claim 1 or 2, wherein said connecting surface (31,32) are connecting by means of gluing, said cabin (1) comprising a perimetral ring (40) welded to said one side (32B,32C) of said connecting surface (32) of said roof (20).

4. Cabin (1) according to claim 3, wherein said connection elements comprise an adhesive substance (AS) provided between said perimetral ring (40) and said connecting surface (31) of said main body (10).

5. Method for realizing a cabin of a truck, said cabin comprising:
- a main body (10) made of metallic material comprising a perimetral support structure (11) which develops between a lower base (12) and an upper frame (14), said main body (10) comprising a connecting surface (31) of said body (10) which develops within said perimetral support structure (11);
- a roof (20) made of metallic material comprising a covering structure (21) and a perimetral edge (29), said roof (20) comprising a connecting surface (32) of said roof (20) which develops within said perimetral support structure (21),
wherein the method comprises the steps of:
- providing a side (32B, 32C) of said connecting surface (32) of said roof (20) connectable to a perimetral ring (40) and providing on said roof (20) a perimetral recess (R) adjacent to said perimetral edge (29) of said roof (20);
- connecting said connecting surface (32) of said roof (20) to the connecting surface (31) of said main body (10) by a laser braze welding so that weld material is housed in said perimetral recess (R); or
- connecting a perimetral ring (40) to said side (32B,32C) of said connecting surface (32) and connecting said connecting surfaces (31,32) by means of gluing.

6. Method according to the claim 5, wherein said perimetral ring (40), is connected to said side (32B) of said connecting surface (32) by means of spot welding.

7. Method according to claim 6, wherein when the connecting surfaces (31,32) are connected by gluing, the method also comprise the step of providing further connecting elements which exert a closing action to close said perimetral ring (40) to said connecting surface (31) of said main body (10).

8. Method according to claim 5, wherein when the connecting surface (31,32) are connected by gluing then an adhesive substance (AS) is provided between said perimetral ring (40) and said connecting surface (31) of said main body (10).

9. Method according to claim 5, wherein when said connecting surfaces (31,32) are connecting by gluing, a sealing element or an ornament element is inserted in said recess (R).

## Patentansprüche

1. Kabine (1) für einen Lastwagen, umfassend:
- einen Hauptkorpus (10) aus einem metallischen Material, mit einer umgebenden Tragstruktur (11), die sich zwischen einer unteren Basis (12) und einem oberen Rahmen (14) entwickelt;
- ein Dach (20) aus einem metallischen Material, umfassend eine Abdeckstruktur (21) und eine Umfangskante (29),
wobei der Hauptkorpus (10) eine Verbindungsfläche (31) des Hauptkorpus (10) umfasst, die sich innerhalb der umgebenden Tragstruktur (11) entwickelt, wobei das Dach (20) eine Verbindungsfläche (32) des Daches (10) umfasst, die sich innerhalb der Abdeckstruktur (21) entwickelt, und die Verbindungsfläche (31) des Hauptkorpus (10) mit der Verbindungsfläche (32) des Daches (20) verbunden ist, und die Umfangskante (29) des Daches (20) eine Umfangsausnehmung (R) umfasst, die zu der Umfangskante (29) benachbart ist, wobei eine Seite (32B,32C) der Verbindungsfläche (32) des Daches (20) mit einem Umfangsring (40) aus einem metallischen Material verbindbar ist, **dadurch gekennzeichnet, dass** die Verbindungsflächen (31,32) durch Laser-Schweißlöten verbunden sind, und die Ausnehmung (R) eine Aufnahme für Schweißmaterial aufweist.

2. Kabine (1) gemäß Anspruch 1, bei welcher die Verbindungsflächen (31,32) im wesentlichen flach sind.

3. Kabine (1) gemäß Anspruch 1 oder 2, bei welchem die Verbindungsflächen (31,32) durch Kleben verbunden sind, und die Kabine (1) einen Umfangsring (40) aufweist, der an eine Seite (32B,32C) der Verbindungsfläche (32) des Daches (20) angeschweißt ist.

4. Kabine (1) gemäß Anspruch 3, bei welcher die Verbindungselemente einen Klebstoff (AS) umfassen, der zwischen dem Umfangsring (40) und der Verbindungsfläche (31) des Hauptkorpus (10) vorhanden ist.

5. Verfahren zur Herstellung einer Kabine eines Lastwagens, welche Kabine umfasst:
- einen Hauptkorpus (10) aus einem metallischen Material, umfassend eine umgebende Tragstruktur (11), die sich zwischen einer unteren Basis (12) und einem oberen Rahmen (14) entwickelt, wobei der Hauptkörper (10) eine Verbindungsfläche (31) des Hauptkörpers (10) umfasst, die sich innerhalb der umgebenden Tragstruktur (11) entwickelt;
- ein Dach (20) aus einem metallischen Material, umfassend eine Abdeckstruktur (21) und eine Umfangskante (29), welches Dach (20) eine Verbindungsfläche (32) des Daches (20) umfasst, die sich innerhalb der umgebenden Tragstruktur (21) entwickelt,
wobei das Verfahren die folgenden Schritte umfasst:
- Schaffung einer Seite (32B,32C) der Verbindungsfläche (32) des Daches (20) als verbindbar zu dem Umfangsring (40) und Vorsehen einer Umfangsausnehmung (R) an dem Dach (20) benachbart zu der Umfangskante (29) des Daches (20);
- Verbinden der Verbindungsfläche (32) des Daches (20) mit der Verbindungsfläche (31) des Hauptkorpus (10) durch Laser-Schweißlöten, derart, dass Schweißmaterial in der Umfangsausnehmung (R) aufgenommen wird; oder
- Verbinden eines Umfangsrings (40) mit einer Seite (32B,32C) der Verbindungsfläche (32) und Verbinden der Verbindungsflächen (31,32) durch Kleben.

6. Verfahren gemäß Anspruch 5, bei welchem der Umfangsring (40) mit der Seite (32B) der Verbindungsfläche (32) durch Punktschweißen verbunden wird.

7. Verfahren gemäß Anspruch 6, bei welchem dann, wenn die Verbindungsflächen (31,32) durch Kleben verbunden werden, das Verfahren ferner dem Schritt des Vorsehens weiterer Verbindungselemente umfasst, welche eine Schließfunktion zum Schließen den Umfangsrings (40) mit der Verbindungsfläche (31) des Hauptkorpus (10) ausüben.

8. Verfahren gemäß Anspruch 5, bei welchem dann, wenn die Verbindungsflächen (31,32) durch Kleben verbunden werden, ein Klebstoff (AS) zwischen den Umfangsring (40) und die Verbindungsfläche (31) des Hauptkorpus eingebracht wird.

9. Verfahren gemäß Anspruch 5, bei welchem dann, wenn die Verbindungsflächen (31,32) durch Kleben verbunden werden, ein Dichtungselement oder ein Zierelement in die Ausnehmung (R) eingesetzt wird.

## Revendications

1. Cabine (1) pour camion, comprenant :
- un corps principal (10) constitué d'un matériau métallique comprenant une structure de soutien périphérique (11) qui se développe entre une base inférieure (12) et un cadre supérieur (14) ;
- un toit (20) constitué d'un matériau métallique comprenant une structure de protection (21) et un bord périphérique (29),
ledit corps principal (10) comprenant une surface de liaison (31) dudit corps principal (10) qui se développe dans ladite structure de soutien périphérique (11), ledit toit (20) comprenant une surface de liaison (32) dudit toit (10) qui se développe vers l'intérieur de ladite structure de protection (21), ladite surface de liaison (31) dudit corps principal (10) étant reliée à ladite surface de liaison (32) dudit toit (20), dans laquelle ledit bord périphérique (29) dudit toit (20) comprend un évidement périphérique (R) adjacent audit bord périphérique (29) et dans laquelle un premier côté (32B, 32C) de ladite surface de liaison (32) dudit toit (20) peut être relié à un anneau périphérique (40) constitué d'un matériau métallique, **caractérisée en ce que** lesdites surfaces de liaison (31, 32) sont reliées au moyen d'un soudobrasage laser, ledit évidement (R) offrant un logement pour ledit matériau de soudage.

2. Cabine (1) selon la revendication 1, dans laquelle lesdites surfaces de liaison (31, 32) sont sensiblement plates.

3. Cabine (1) selon la revendication 1 ou 2, dans laquelle lesdites surfaces de liaison (31, 32) sont reliées par des moyens de collage, ladite cabine (1) comprenant un anneau périphérique (40) soudé audit premier côté (32B, 32C) de ladite surface de liaison (32) dudit toit (20).

4. Cabine (1) selon la revendication 3, dans laquelle lesdits éléments de liaison comprennent une substance adhésive (AS) disposée entre ledit anneau périphérique (40) et ladite surface de liaison (31) dudit corps principal (10).

5. Procédé de réalisation d'une cabine d'un camion, ladite cabine comprenant :
- un corps principal (10) constitué d'un matériau métallique comprenant une structure de soutien périphérique (11) qui se développe entre une base inférieure (12) et un cadre supérieur (14), ledit corps principal (10) comprenant une surface de liaison (31) dudit corps (10) qui se développe dans ladite structure de soutien périphérique (11) ;
- un toit (20) constitué d'un matériau métallique comprenant une structure de protection (21) et un bord périphérique (29), ledit toit (20) comprenant une surface de liaison (32) dudit toit (20) qui se développe dans ladite structure de soutien périphérique (21),
le procédé comprenant les étapes consistant à :
- prévoir un côté (32B, 32C) de ladite surface de liaison (32) dudit toit (20) qui peut être relié à un anneau périphérique (40) et prévoir, sur ledit toit (20), un évidement périphérique (R) adjacent audit bord périphérique (29) dudit toit (20) ;
- relier ladite surface de liaison (32) dudit toit (20) à la surface de liaison (31) dudit corps principal (10) par soudobrasage laser de sorte que le matériau de soudage soit logé dans ledit évidement périphérique (R) ; ou
- relier un anneau périphérique (40) audit premier côté (32B, 32C) de ladite surface de liaison (32) et relier lesdites surfaces de liaison (31, 32) par des moyens de collage.

6. Procédé selon la revendication 5, dans lequel ledit anneau périphérique (40) est relié audit premier côté (32B) de ladite surface de liaison (32) par des moyens de soudage par point.

7. Procédé selon la revendication 6, dans lequel, quand les surfaces de liaison (31, 32) sont reliées par collage, le procédé comprend également l'étape consistant à prévoir des éléments de liaison supplémentaires qui exercent une action de rapprochement afin de rapprocher ledit anneau périphérique (40) de ladite surface de liaison (31) dudit corps principal (10).

8. Procédé selon la revendication 5, dans lequel, quand les surfaces de liaison (31, 32) sont reliées par collage, alors une substance adhésive (AS) est disposée entre ledit anneau périphérique (40) et ladite surface de liaison (31) dudit corps principal (10).

9. Procédé selon la revendication 5, dans lequel, quand lesdites surfaces de liaison (31, 32) sont reliées par collage, un élément d'étanchéité ou un élément d'ornement est introduit dans ledit évidement (R).
